(19) **Europäisches Patentamt European Patent Office Office européen des brevets**

(11) **EP 3 230 503 B1**

(12) **FASCICULE DE BREVET EUROPEEN**

(45) Date de publication et mention de la délivrance du brevet:
**17.07.2019 Bulletin 2019/29**

(21) Numéro de dépôt: **15805191.2**

(22) Date de dépôt: **07.12.2015**

(51) Int Cl.:
***D02G 3/48*** *(2006.01)*

(86) Numéro de dépôt international:
**PCT/EP2015/078838**

(87) Numéro de publication internationale:
**WO 2016/091811 (16.06.2016 Gazette 2016/24)**

(54) **CÂBLÉ TEXTILE ARAMIDE À AU MOINS TRIPLE TORSION**

ARAMIDTEXTILKORD MIT MINDESTENS EINER DREIFACHEN VERDREHUNG

ARAMID TEXTILE CORD WITH AN AT LEAST TRIPLE TWIST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2014 FR 1462103**

(43) Date de publication de la demande:
**18.10.2017 Bulletin 2017/42**

(73) Titulaire: **Compagnie Générale des Etablissements Michelin**
**63000 Clermont-Ferrand (FR)**

(72) Inventeurs:
* **CORNILLE, Richard**
  **63040 Clermont-Ferrand Cedex 9 (FR)**
* **GUILLAUMAIN, Jérémy**
  **63040 Clermont-Ferrand Cedex 9 (FR)**
* **LE CLERC, Christophe**
  **63040 Clermont-Ferrand Cedex 9 (FR)**
* **BOSQUET, Augustin**
  **63040 Clermont-Ferrand Cedex 9 (FR)**

(74) Mandataire: **Desbordes, Guillaume**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 186 652    US-A- 1 632 201**
**US-A- 1 708 668    US-A- 2 116 937**

Remarques:
Le dossier contient des informations techniques présentées postérieurement au dépôt de la demande et ne figurant pas dans le présent fascicule.

**Description**

1. <u>DOMAINE DE L'INVENTION</u>

La présente invention est relative aux éléments de renforcement ou « renforts » textiles utilisables pour le renforcement d'articles en matière plastique ou d'articles en caoutchouc tels que des pneumatiques pour véhicules.

Elle se rapporte plus particulièrement à des câblés ou retors textiles utilisables notamment pour le renforcement de tels pneumatiques.

2. <u>ETAT DE LA TECHNIQUE</u>

Le textile est utilisé comme renfort depuis les origines du pneu.

Les câblés textiles, fabriqués à partir de fibres textiles continues telles que des fibres en polyester, nylon, cellulose ou aramide, jouent on le sait un rôle important dans les pneus, y compris dans les pneus haute performance homologués pour rouler à très haute vitesse. Pour répondre aux exigences des pneus, ils doivent présenter une forte résistance à la rupture, un module en extension élevé, une bonne endurance en fatigue et enfin une bonne adhésion aux matrices de caoutchouc ou autres polymères qu'ils sont susceptibles de renforcer.

On rappellera simplement ici que ces retors ou câblés textiles, traditionnellement à double torsion (T1, T2), sont préparés par un procédé dit de retordage (« *twisting* ») dans lequel :

- au cours d'une première étape, chaque filé ou fibre multifilamentaire (en anglais « *yarn* ») constitutive du câblé final est tout d'abord individuellement tordue sur elle-même (selon une torsion initiale T1) dans une direction donnée D1 (respectivement sens S ou Z), pour former un brin (en anglais « *strand* ») dans lequel les filaments élémentaires se voient imposés une déformation en hélice autour de l'axe de fibre (ou axe du brin) ;

- puis, au cours d'une seconde étape, plusieurs brins, généralement au nombre de deux, trois ou quatre, de natures identiques ou différentes dans le cas de câblés dits hybrides ou composites, sont ensuite retordus ensemble selon une torsion finale T2 (pouvant être égale à ou différente de T1) en direction opposée D2 (respectivement sens Z ou S, selon une nomenclature reconnue désignant l'orientation des spires selon la barre transversale d'un S ou d'un Z), pour l'obtention du câblé (en anglais « *cord* ») ou assemblage final à plusieurs brins.

Le rôle du retordage est d'adapter les propriétés du matériau afin de créer la cohésion transversale du renfort, d'accroître sa tenue en fatigue et aussi d'améliorer l'adhésion avec la matrice renforcée.

De tels câblés textiles, leurs constructions et procédés de fabrication sont bien connus de l'homme du métier. Ils ont été décrits en détail dans un grand nombre de documents, pour ne citer que quelques exemples dans les documents brevet EP 021 485, EP 220 642, EP 225 391, EP 335 588, EP 467 585, US 3 419 060, US 3 977 172, US 4 155 394, US 5 558, 144, WO97/06294 ou EP 848 767, ou plus récemment WO2012/l04279, WO2012/146612, WO2014/057082.

Des câblés à triple torsion sont décrits dans les documents EP2186652, US1708668, US2116937 et, US1632201.

Pour pouvoir renforcer des articles en caoutchouc tels que des pneumatiques, la résistance à la fatigue (endurance en extension, flexion, compression) de ces câblés textiles est primordiale. On sait que de manière générale, pour un matériau donné, elle est d'autant plus élevée que les torsions employées sont importantes, mais qu'en contrepartie, leur force à la rupture en extension (appelée ténacité lorsqu'elle est ramenée à l'unité de poids) diminue inexorablement lorsqu'augmente la torsion, ce qui bien entendu est pénalisant du point de vue du renforcement.

Aussi, les concepteurs de câblés textiles, comme les fabricants de pneumatiques, sont en permanence à la recherche de câblés textiles dont les propriétés mécaniques, particulièrement force rupture et ténacité, pour un matériau et une torsion donnés, pourraient être améliorées.

3. <u>BREVE DESCRIPTION DE L'INVENTION</u>

Or, au cours de leurs recherches, les Demanderesses ont précisément trouvé un câblé textile nouveau de type aramide dont l'architecture et la construction spécifiques permettent de manière inattendue, pour une torsion finale donnée, d'améliorer non seulement les propriétés de force-rupture et de ténacité, mais encore les propriétés d'endurance en compression ou flexion-compression.

Ainsi, selon un premier objet, la présente invention concerne un câblé textile aramide à au moins triple torsion (T1, T2, T3), comportant au moins N brins, N étant supérieur à 1, retordus ensemble selon une torsion T3 et une direction D2, chaque brin étant constitué de M pré-brins, M étant supérieur à 1, eux-mêmes tordus ensemble selon une torsion T2 et une direction D1 opposée à D2, chaque pré-brin consistant lui-même en un filé qui a été tordu préalablement sur lui-même selon une torsion T1 et la direction D1, dans lequel au moins la moitié des N fois M filés sont des filés aramides et dans lequel la somme T1+T2 est comprise entre 0,8 et 1,2 fois T3.

L'invention concerne également l'utilisation d'un tel câblé textile comme élément de renforcement d'articles ou produits semi-finis en matière plastique ou en caoutchouc tels que des tuyaux, des courroies, des bandes transporteuses, des pneumatiques pour véhicules, ainsi que ces articles, produits semi-finis en caoutchouc et pneumatiques eux-mêmes, tant à l'état cru (c'est-à-dire avant cuisson ou vulcanisation) qu'à l'état cuit (après cuisson).

Les pneumatiques de l'invention, en particulier, peuvent être destinés à des véhicules à moteur du type tourisme, 4x4, "SUV" (*Sport Utility Vehicles*), mais également à des véhicules deux-roues tels que motos, ou à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules de transport ou de manutention.

Le câblé textile de l'invention est tout particulièrement destiné à être utilisé dans des armatures de sommet (ou ceintures) ou dans des armatures de carcasse de pneumatiques pour les véhicules décrits ci-dessus.

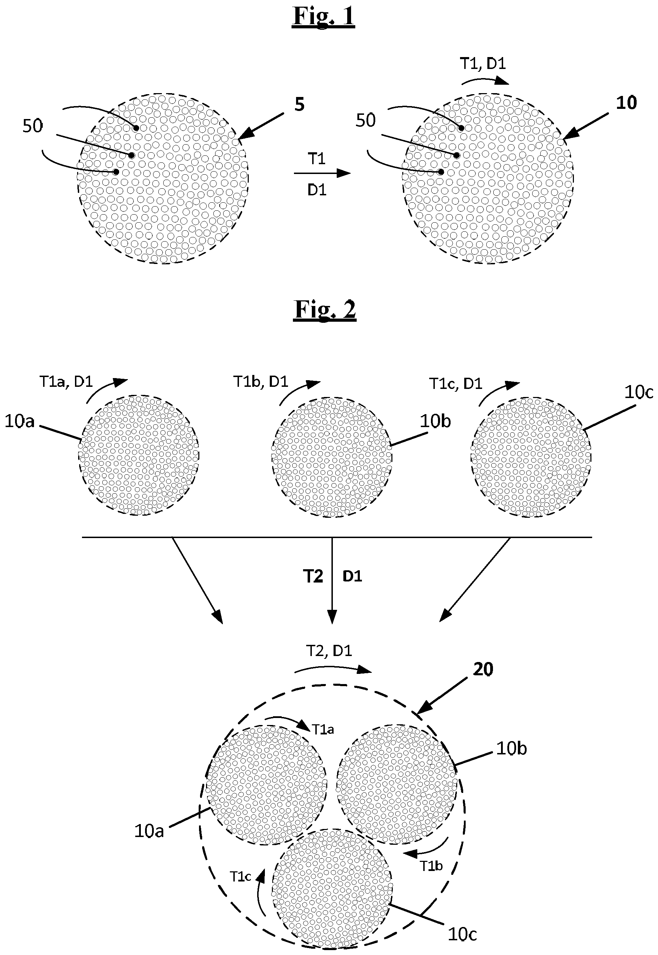

L'invention ainsi que ses avantages seront aisément compris à la lumière de la description détaillée et des exemples de réalisation qui suivent, ainsi que des figures 1 à 7 relatives à ces exemples qui schématisent (sauf indication contraire, sans respect d'une échelle spécifique) :

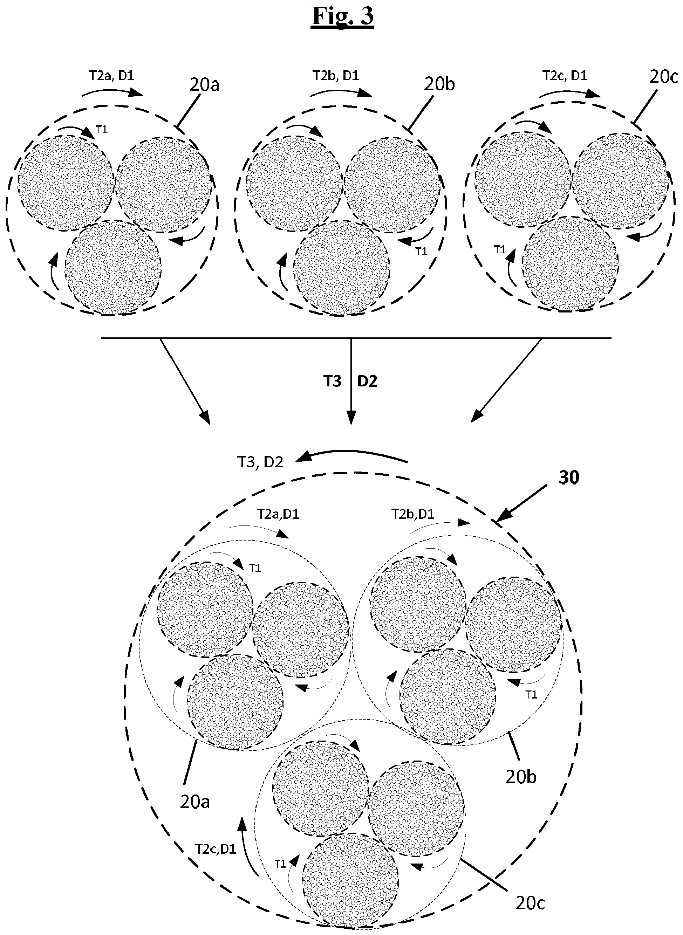

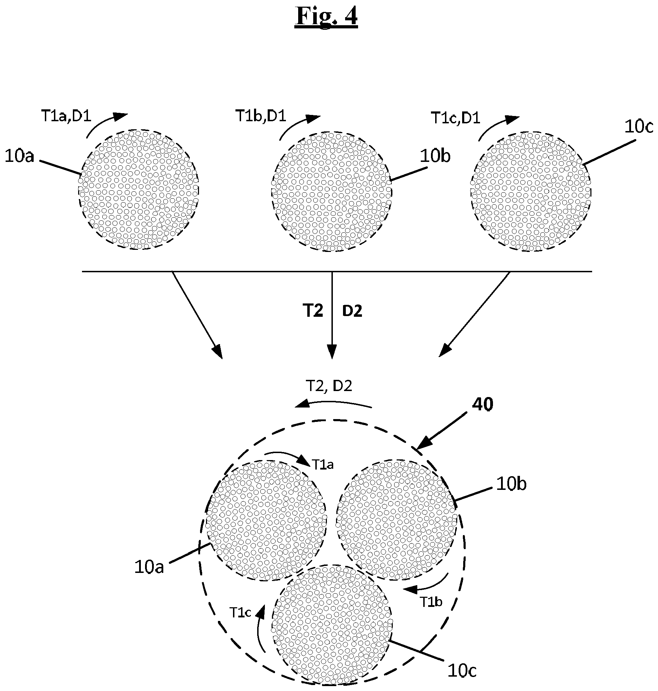

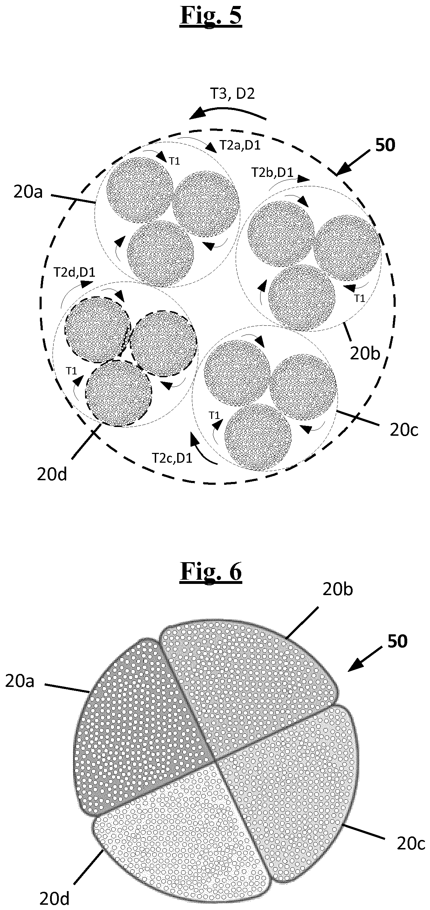

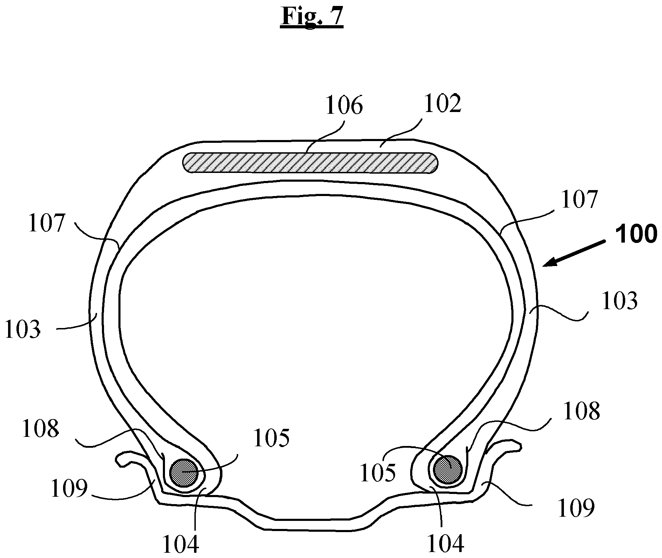

- en coupe transversale, une fibre textile multifilamentaire conventionnelle (ou filé), tout d'abord à l'état initial (5) c'est-à-dire dépourvu de torsion, puis après une première opération de torsion T1 dans la direction D1, pour formation d'un filé tordu sur lui-même ou « pré-brin » (10) (Fig. 1) ;
- en coupe transversale, l'assemblage de 3 filés (10a, 10b, 10c) tels que ci-dessus remplissant la fonction de pré-brins (tordus préalablement selon T1a, T1b, T1c dans la même direction D1) qui sont assemblés par une deuxième opération de torsion T2 toujours dans la même direction D1, pour formation d'un brin (20) destiné au câblé selon l'invention (Fig. 2) ;
- en coupe transversale, l'assemblage de 3 brins (20a, 20b, 20c) tels que ci-dessus (tordus préalablement selon T2a, T2b, T2c dans la même direction D1) qui sont assemblés par une troisième opération de torsion T3 cette fois dans la direction D2 opposée à la direction D1, pour formation d'un câblé textile final (30) à triple torsion (T1, T2, T3) conforme à l'invention (Fig. 3) ;
- en coupe transversale, l'assemblage conventionnel de 3 filés (10a, 10b, 10c) tels que ci-dessus remplissant cette fois directement la fonction de brins (tous tordus préalablement selon T1a, T1b, T1c dans la direction D1) qui sont assemblés par une deuxième opération de torsion T2 dans la direction D2 opposée à la direction D1, pour formation d'un câblé textile selon l'art antérieur (40) à double torsion (T1, T2) (Fig. 4) ;
- en coupe transversale, l'assemblage de 4 brins (20a, 20b, 20c, 20d) (tordus préalablement selon T2a, T2b, T2c, T2d dans la même direction D1) qui sont assemblés par une troisième opération de torsion T3 dans la direction D2 opposée à la direction D1, pour formation d'un câblé textile final (50) à triple torsion (T1, T2, T3) conforme à l'invention (Fig. 5) ;
- en coupe transversale, une autre représentation du câblé (50) ci-dessus, moins schématique que la précédente, illustrant le fait que la section finale d'un câblé textile (qu'il soit d'ailleurs conforme ou non à l'invention), une fois formé et sous une tension minimale, s'approche plus dans les faits d'une section à contour circulaire, en raison de la forte plasticité latérale apportée par la nature multifilamentaire du matériau de départ (Fig. 6) ;
- enfin, en coupe radiale (c'est-à-dire selon un plan contenant l'axe de rotation du pneu), un exemple de pneu conforme à l'invention, incorporant un câblé textile selon l'invention (Fig. 7).

## 4. DESCRIPTION DÉTAILLÉE DE L'INVENTION

Dans la présente demande, sauf indication expresse différente, tous les pourcentages (%) indiqués sont des pourcentages en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le câblé ou retors textile aramide de l'invention est donc (en référence aux figures 1 à 3, et 5 annexées) un câblé textile (30, 50) de construction très spécifique, qui a pour caractéristiques essentielles de comporter :

- au moins une triple (c'est-à-dire trois ou plus de trois) torsion (T1, T2, T3) ;
- au moins N brins (20, 20a, 20b, 20c, 20d), N étant supérieur à 1, qui sont retordus ensemble selon une torsion finale T3 et une même direction finale D2 ;
- chaque brin étant constitué de M pré-brins (10, 10a, 10b, 10c), M étant supérieur à 1, eux-mêmes tordus ensemble selon une torsion intermédiaire T2 (T2a, T2b, T2c, T2d) et une direction intermédiaire D1 opposée à D2 ;

- chaque pré-brin consistant en un filé (5) qui a été tordu préalablement sur lui-même selon une torsion initiale T1 (T1a, T1b, T1c) et la direction initiale D1.

Par câblé ayant au moins une triple torsion (c'est-à-dire trois torsions ou plus), l'homme du métier comprendra immédiatement qu'au moins trois opérations consécutives de détorsion (ou torsion en sens inverse) sont donc nécessaires pour « déconstruire » le câblé de l'invention et « remonter » aux filés initiaux le constituant, c'est-à-dire retrouver les filés (fibres multifilamentaires) de départ dans leur état initial c'est-à-dire dépourvu de torsion. Dit autrement, il y a au moins trois (trois ou plus) opérations de torsion successives pour constituer le câblé de l'invention, et non deux comme c'est le cas habituellement.

Une autre caractéristique essentielle est qu'au moins la moitié des filés constitutifs du câblé sont des filés aramides.

La structure du câblé textile de l'invention ainsi que ses étapes de fabrication vont être maintenant décrites en détail.

Tout d'abord, la figure 1 schématise, en coupe transversale, une fibre textile multifilamentaire conventionnelle (5), encore appelé « filé » (en anglais *« yarn »*), à l'état initial c'est-à-dire dépourvu de torsion ; de manière bien connue, un tel filé est formé d'une pluralité de filaments élémentaires (50), typiquement plusieurs dizaines à plusieurs centaines, de diamètre très fin généralement inférieur à 25 $\mu$m.

Après une opération de torsion T1 (première torsion) dans une direction D1 (S ou Z), le filé initial (5) est transformé en un filé tordu sur lui-même appelé « pré-brin » (10). Dans ce pré-brin, les filaments élémentaires se voient ainsi imposés une déformation en hélice autour de l'axe de fibre (ou axe du pré-brin).

Puis, comme illustré à titre d'exemple à la figure 2, M pré-brins (par exemple ici au nombre de trois ; 10a, 10b, 10c) sont ensuite eux-mêmes tordus ensemble, dans la même direction D1 que précédemment, selon une torsion intermédiaire T2 (deuxième torsion) pour formation d'un «brin» (20). Chaque pré-brin est caractérisé par une première torsion T1 spécifique (par exemple ici, T1a, T1b, T1c) qui peut être égale (dans le cas général, c'est-à-dire qu'ici on a par exemple T1a = T1b = T1c) ou différente d'un pré-brin à l'autre.

Enfin, comme schématisé à la figure 3, N brins (par exemple ici au nombre de trois ; 20a, 20b, 20c) sont ensuite eux-mêmes tordus ensemble, dans la direction D2 opposée à D1, selon une torsion finale T3 (troisième torsion) pour formation du câblé textile final (30) conforme à l'invention. Chaque brin est caractérisé par une deuxième torsion T2 spécifique (par exemple ici, T2a, T2b, T2c) qui peut être égale (dans le cas général, c'est-à-dire qu'ici on a par exemple T2a = T2b = T2c) ou différente d'un brin à l'autre.

Le câblé textile final (30) ainsi obtenu, comportant N fois M (ici, par exemple neuf) pré-brins, se caractérise donc par (au moins) une triple torsion (T1, T2, T3).

L'invention s'applique bien entendu aux cas où plus de trois torsions successives, par exemple au nombre de quatre (T1, T2, T3, T4) ou cinq (T1, T2, T3, T4, T5), seraient appliquées aux filés (5) de départ. Toutefois, l'invention est préférentiellement mise en oeuvre avec seulement trois opérations successives de torsion (T1, T2, T3), notamment pour des raisons de coût.

La figure 4, comparativement à la figure 3, illustre un mode conventionnel de préparation de câblés textiles à double torsion. M pré-brins (par exemple ici au nombre de trois, 10a, 10b, 10c) - remplissant en fait directement la fonction de brins - sont retordus ensemble, dans une (deuxième) direction D2 opposée à la (première) direction de torsion D1, pour formation directe d'un câblé textile (40) à double torsion (T1, T2) selon l'art antérieur.

La figure 5 schématise, en coupe transversale, l'assemblage de 4 brins (20a, 20b, 20c, 20d) (tordus préalablement selon T2a, T2b, T2c, T2d dans la même direction D1) qui sont assemblés par une troisième opération de torsion T3 dans la direction D2 opposée à la direction D1, pour formation d'un autre exemple de câblé final (50) à triple torsion (T1, T2, T3) conforme à l'invention. Chaque brin est caractérisé par une deuxième torsion T2 spécifique (ici, T2a, T2b, T2c, T2d) qui peut être égale ou différente d'un brin à l'autre.

Pour rappel, la figure 6 représente, toujours en coupe transversale, une autre représentation du câblé (50) précédent, moins schématique que la précédente, rappelant le fait bien connu que la section d'un câblé textile, qu'il soit d'ailleurs conforme ou non à l'invention, une fois formé et sous une tension minimale, s'approche plus dans les faits d'une structure cylindrique à section à contour essentiellement circulaire, en raison de la forte plasticité radiale, latérale des brins (20a, 20b, 20c, 20d) et pré-brins (10a, 10b, 10c), apportée par la nature multifilamentaire des fibres (filés) de départ.

Dans la présente demande, on entend par « textile » ou « matériau textile », de manière très générale, tout matériau en une matière autre que métallique, qu'elle soit naturelle comme synthétique, susceptible d'être transformée en fil, fibre ou film par tout procédé de transformation approprié. On peut citer par exemple, sans que les exemples ci-après soient limitatifs, un procédé de filage de polymère tel que par exemple filage au fondu, filage en solution ou filage de gel.

Plus particulièrement, par « aramide », on rappelle que doit être entendue selon la nomenclature reconnue un polymère constitué de macromolécules linéaires formées de groupes aromatiques liés entre eux par des liaisons amides dont au moins 85 % sont directement liées à deux noyaux aromatiques, et plus particulièrement de fibres en poly(p-phénylène téréphtalamide) (ou « PPTA »), fabriquées depuis fort longtemps à partir de compositions de filage optiquement anisotropes.

A titre d'exemples de telles fibres aramides, on citera par exemple les fibres commercialisées par la société DuPont sous la dénomination « Kevlar », par la société Teijin sous les dénominations « Twaron » ou « Technora ».

Bien entendu, l'invention s'applique aux cas où le câblé textile aramide de l'invention est formé de plusieurs filés dont au moins un (c'est-à-dire un ou plusieurs) est en matériau différent d'un matériau aramide, pour constituer un câblé hybride ou composite, étant entendu qu'au moins la moitié des N fois M filés étant des filés aramides. A titre d'exemples de tels câblés aramides hybrides, on peut citer notamment ceux à base de filés d'au moins aramide et nylon, aramide et polyester (par exemple PET ou PEN), aramide et cellulose, ou aramide et polycétone.

Dans le câblé de l'invention, N varie de préférence dans un domaine de 2 à 6, plus préférentiellement de 2 à 4. Selon un autre mode de réalisation préférentiel, M varie dans un domaine de 2 à 6, plus préférentiellement de 2 à 4. Selon un autre mode de réalisation préférentiel, le nombre total de filés (égal à N fois M), est compris dans un domaine de 4 à 25, plus préférentiellement de 4 à 16.

De manière bien connue de l'homme du métier, les torsions peuvent être mesurées et exprimées de deux manières différentes, soit et de manière simple en nombre de tours par mètre (t/m), soit et ce qui est plus rigoureux lorsqu'on souhaite comparer des matériaux de natures (masses volumiques) et/ou de titres différents, en angle d'hélice des filaments ou ce qui est équivalent sous forme d'un facteur de torsion K.

Le facteur de torsion K est lié à la torsion T (ici, par exemple, respectivement T1, T2 et T3) selon la relation connue qui suit :

$$K = (\text{Torsion } T) \times [(\text{Titre} / (1000.\rho)]^{1/2}$$

dans laquelle la torsion T des filaments élémentaires (constitutifs du pré-brin, brin ou retors) est exprimée en tours par mètre, le titre est exprimé en tex (poids en gramme de 1000 mètres de pré-brin, brin ou retors), et enfin $\rho$ est la densité ou masse volumique (en g/cm$^3$) du matériau constitutif du pré-brin, brin ou retors (par exemple, environ 1,50 g/cm$^3$ pour la cellulose, 1,44 g/cm$^3$ pour l'aramide, 1,38 g/cm$^3$ pour un polyester tel que PET, 1,14 g/cm$^3$ pour le nylon) ; dans le cas d'un câblé hybride, $\rho$ est bien entendu une moyenne des densités pondérée par les titres respectifs des matériaux constitutifs des pré-brins, brins ou retors.

Dans le câblé de l'invention, préférentiellement, la torsion T1 exprimée en tours par mètre (t/m) est comprise entre 10 et 350, plus préférentiellement entre 20 et 200. Selon un autre mode de réalisation préférentiel, chaque pré-brin présente un coefficient de torsion K1 qui est compris entre 2 et 80, plus préférentiellement entre 6 et 70.

Selon un autre mode de réalisation préférentiel, la torsion T2 exprimée en tours par mètre est de préférence comprise entre 25 et 470, plus préférentiellement entre 35 et 400. Selon un autre mode de réalisation préférentiel, chaque brin présente un coefficient de torsion K2 qui est compris entre 10 et 150, plus préférentiellement entre 20 et 130.

Selon un autre mode de réalisation préférentiel, la torsion T3 exprimée en tours par mètre est de préférence comprise entre 30 et 600, plus préférentiellement entre 80 et 500. Selon un autre mode de réalisation préférentiel, le câblé de l'invention présente un coefficient de torsion K3 qui est compris entre 50 et 500, plus préférentiellement entre 80 et 230.

De préférence, T2 est supérieure à T1 (Tl et T2 étant notamment exprimées en t/m). Selon un autre mode préférentiel, combiné ou non au précédent, T2 est inférieure à T3 (T2 et T3 étant notamment exprimées en t/m), T2 étant plus préférentiellement comprise entre 0,2 et 0,95 fois T3, en particulier entre 0,4 et 0,8 fois T3.

Conformément à l'invention, la somme T1+T2 est comprise entre 0,8 et 1,2 fois T3, plus préférentiellement entre 0,9 et 1,1 fois T3 (T1, T2 et T3 étant notamment exprimées en t/m), T1+T2 étant en particulier égale à T3.

Dans le câblé de l'invention, de préférence la majorité (en nombre), plus préférentiellement la totalité des N fois M filés sont des filés aramides. A l'état initial, c'est-à-dire sans la torsion T1, ces filés aramides présentent un module initial Mi qui est préférentiellement supérieur à 2000 cN/tex, plus préférentiellement supérieur à 3000 cN/tex. Le module initial en extension Mi, ou module d'Young, est bien entendu le module en extension longitudinal c'est-à-dire selon l'axe du filé.

Toutes les propriétés (titre, module initial des filés, force à la rupture et ténacité) indiquées précédemment sont déterminées à 20°C sur des câblés écrus (c'est-à-dire non encollés) ou encollés (c'est-à-dire prêts à l'emploi ou extraits de l'article qu'ils renforcent) qui ont été soumis à un conditionnement préalable ; par "conditionnement préalable", on entend le stockage des câblés (après séchage) pendant au moins 24 heures, avant mesure, dans une atmosphère standard selon la norme européenne DIN EN 20139 (température de 20 ± 2°C ; hygrométrie de 65 ± 2 %).

Le titre (ou densité linéaire) des pré-brins, brins ou des câblés est déterminé sur au moins trois échantillons, chacun correspondant à une longueur d'au moins 5 m par pesée de cette longueur ; le titre est donné en tex (poids en grammes de 1000 m de produit - rappel: 0, 111 tex égal à 1 denier).

Les propriétés mécaniques en extension (ténacité, module initial, allongement à la rupture) sont mesurées de manière connue à l'aide d'une machine de traction « INSTRON » munie de pinces à embarrage du type « 4D » (pour force rupture inférieure à 100 daN) ou « 4E » (pour force rupture au moins égale à 100 daN), sauf indications différentes selon la norme ASTM D885 (2010). Les échantillons testés subissent une traction sur une longueur initiale de 400 mm pour les pinces 4D et 800 mm pour les pinces 4E, à une vitesse nominale de 200 mm/min, sous une prétension standard de 0,5 cN/tex. Tous les résultats donnés sont une moyenne de 10 mesures. Lorsque les propriétés sont mesurées sur des filés, ces derniers subissent de manière bien connue une très faible torsion préalable, dite « torsion de protection », correspondant à un angle d'hélice d'environ 6 degrés, avant positionnement et traction dans les pinces.

La ténacité (force-rupture divisée par le titre) et le module initial en extension (ou module d'Young) sont indiqués en cN/tex ou centinewton par tex (pour rappel, 1 cN/tex égal à 0,111 g/den (gramme par denier)). Le module initial est représenté par la tangente à l'origine de la courbe Force-Allongement, défini comme la pente de la partie linéaire de la courbe Force-Allongement qui intervient juste après une prétension standard de 0,5 cN/tex. L'allongement à la rupture est indiqué en pourcentage.

## 5. EXEMPLES DE REALISATION DE L'INVENTION

Le câblé textile aramide de l'invention est avantageusement utilisable pour le renforcement de pneus de tous types de véhicules, en particulier de motos, véhicules tourisme ou véhicules industriels tels que Poids-lourd, Génie civil, avions, autres véhicules de transport ou de manutention.

A titre d'exemple, la figure 7 représente de manière très schématique (sans respect d'une échelle spécifique), une coupe radiale d'un pneu conforme à l'invention par exemple pour véhicule du type tourisme.

Ce pneumatique 100 comporte un sommet 102 renforcé par une armature de sommet ou ceinture 106, deux flancs 103 et deux bourrelets 104, chacun de ces bourrelets étant renforcé avec une tringle 105. Le sommet 102 est surmonté d'une bande de roulement non représentée sur cette figure schématique. Une armature de carcasse 107 est enroulée autour des deux tringles dans chaque bourrelet, le retournement 108 de cette armature 107 étant par exemple disposé vers l'extérieur du pneumatique 100 qui est ici représenté monté sur sa jante 109.

L'armature de carcasse 107 est de manière connue en soi constituée d'au moins une nappe de caoutchouc renforcée par des câblés textiles dits "radiaux", c'est-à-dire que ces câblés sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 104 et passe par le milieu de l'armature de sommet 106).

La ceinture 106 est par exemple constituée, de manière connue en soi, par au moins deux nappes de caoutchouc dites "nappes de travail" ou "nappes de triangulation", superposées et croisées, renforcées de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au bandage pneumatique une rigidité de dérive élevée. La ceinture 106 comporte en outre dans cet exemple une nappe de caoutchouc dite "nappe de frettage" renforcée par des fils de renforcement dits "circonférentiels", c'est-à-dire que ces fils de renforcement sont disposés pratiquement parallèles les uns aux autres et s'étendent sensiblement circonférentiellement autour du bandage pneumatique de manière à former un angle préférentiellement compris dans un domaine de 0 à 10° avec le plan circonférentiel médian. Ces fils de renforcement circonférentiels ont pour fonction première, on le rappelle, de résister à la centrifugation du sommet à haute vitesse.

Ce pneumatique 100 de l'invention a par exemple pour caractéristique essentielle qu'au moins la nappe de frettage de sa ceinture (106) et/ou son armature de carcasse (107) comporte un câblé textile aramide selon l'invention. Selon un autre exemple de mode de réalisation possible de l'invention, ce sont par exemple les tringles (105) qui pourraient être constituées, en tout ou partie, d'un câblé textile aramide selon l'invention.

Les compositions de caoutchouc utilisées pour ces nappes sont des compositions conventionnelles pour calandrage de renforts textiles, typiquement à base de caoutchouc naturel ou autre élastomère diénique, d'une charge renforçante telle que du noir de carbone, d'un système de vulcanisation et des additifs usuels. L'adhésion entre le câblé textile composite de l'invention et la couche de caoutchouc qui l'enrobe est assurée par exemple par une composition adhésive usuelle, par exemple une colle du type RFL ou colle équivalente.

### 5.1. Essais de traction

Grâce à sa construction spécifique, le câblé textile aramide de l'invention présente des propriétés en traction notablement améliorées, comme le démontrent les exemples de réalisation qui suivent.

Cinq essais de traction différents (Essais N°1 à N°5) ont été conduits avec fabrication au total de 11 câblés textiles de constructions différentes, conformes ou non conformes à l'invention, à base soit de nylon soit d'aramide.

La nature de chaque exemple de câblé (« T » pour témoin, « C » pour comparatif et « I » pour conforme à l'invention), le matériau utilisé (« N » pour nylon, « A » pour aramide), sa construction et ses propriétés finales sont résumés dans le tableau 1 annexé.

Les filés de départ sont bien entendu disponibles commercialement, par exemple pour le nylon vendus par la société Kordsa sous la dénomination « T728 », ou par la société PHP sous les dénominations « Enka 140HRT ou « Enka 444HRST », pour l'aramide par la société DuPont sous la dénomination « Kevlar » ou par la société Teijin sous la dénomination « Twaron ».

Comme déjà indiqué, la ténacité est la force à la rupture rapportée au titre, elle est exprimée en cN/tex. Est également indiquée la ténacité apparente (en daN/mm²), dans ce cas la force à la rupture est rapportée au diamètre apparent noté Ø qui est mesuré selon la méthode qui suit.

On utilise un appareil qui, à l'aide d'un récepteur composé d'un système optique collecteur, d'une photodiode et d'un amplificateur, permet de mesurer l'ombre d'un fil éclairé par un faisceau LASER de lumière parallèle avec une précision de 0,1 micromètre. Un tel appareil est commercialisé par exemple par la société Z-Mike, sous la référence « 1210 ». La méthode consiste à fixer sur une table mobile motorisée, sous une prétension standard de 0,5 cN/tex, un échantillon du fil à mesurer, ayant subi un conditionnement préalable. Solidaire de la table mobile, le fil est déplacé perpendiculairement au système de mesure d'ombre portée à une vitesse de 25 mm/s et coupe orthogonalement le faisceau LASER. Au moins 200 mesures d'ombres portées sont effectuées sur une longueur de 420 mm de fil ; la moyenne de ces mesures d'ombre portée représente le diamètre apparent Ø.

Pour chaque essai, force rupture, ténacité et ténacité apparente ont été également indiquées en valeurs relatives, la base 100 étant retenue pour le câblé témoin de chacun des cinq essais. Les câblés témoins (notés « T » dans le tableau 1) se caractérisent tous par une construction conventionnelle à double torsion T1, T2 ; les autres câblés (comparatifs non conformes à l'invention, ou conformes à l'invention) se caractérisent tous par une construction non conventionnelle à triple torsion T1, T2, T3. Seuls les câblés C8, C9 et C11 sont conformes à l'invention et cumulent la caractéristique de triple torsion et le fait d'être constitués de filés aramides.

Pour aider à la lecture de ce tableau 1, on notera ici que par exemple que la construction notée « N47/-/3/4 » du câblé C1 témoin signifie que ce câblé est un câblé à double torsion (T1, T2) qui est issu simplement d'une opération de torsion (T2, D2 ou S) de 4 brins différents qui ont été chacun préparés préalablement par une opération de torsion en sens inverse (T1, D1 ou Z) individuelle de 3 filés de nylon (N) de titre 47 tex.

La construction notée « N47/1/3/4 » du câblé C2 signifie que ce câblé est un câblé à triple torsion (T1, T2, T3) qui est issu d'une opération de torsion finale (T3, D2 ou S) de 4 brins différents qui ont été chacun préparés préalablement par une opération de torsion intermédiaire (T2) en sens inverse (D1 ou Z) de 3 pré-brins, chacun de ces 3 pré-brins consistant en 1 filé unique de nylon (N) de titre 47 tex qui a été tordu préalablement sur lui-même au cours d'une première opération de torsion T1 dans la même direction (D1 ou Z) que pour les pré-brins.

Les 5 exemples de câblés témoins (« T ») C1, C3, C5, C7 et C10 se caractérisent tous par une construction à double torsion ; ils ont été fabriqués par assemblage de 2, 3 ou 4 brins selon une (deuxième) torsion finale (T2) variant selon les cas de 150 à 300 t/m, correspondant à un coefficient de torsion K2 variant de 175 à 215 et une direction D2 (sens S). De manière conventionnelle, chacun de ces brins avait été préalablement fabriqué par une (première) torsion initiale (notée T1) de 150 à 300 t/m, selon les cas, d'un filé sur lui-même selon la direction opposée D1 (sens Z).

Les 3 exemples de câblés selon l'invention C8, C9 et C11 (aussi notés « I » et en gras dans le tableau 1) se caractérisent par une construction à triple torsion T1, T2, T3 (dans ces exemples, Z/Z/S) ; ils ont été fabriqués par assemblage de 3 ou 4 brins selon une torsion finale (notée T3) de 150 ou 300 t/m (K3 de 203 ou 215) et une direction D2 (sens S). Conformément à l'invention, chacun de ces brins avait été préalablement fabriqué par assemblage de 3 pré-brins selon une torsion T2 (110, 180 ou 240 t/m) et une direction opposée D1 (sens Z), chacun de ces pré-brins ayant été lui-même préparé préalablement par une torsion T1 (respectivement 40, 120 ou 60 t/m) d'un filé sur lui-même, selon la direction D1 (sens Z).

Quant aux 3 exemples comparatifs (notés « C » dans le tableau 1) de câblés non conformes à l'invention C2, C4 et C6, ils se caractérisent tous par une construction à triple torsion T1, T2, T3. A la différence des câblés conformes à l'invention, les filés constitutifs de ces câblés étaient tous des filés en nylon et non des filés aramides.

Il est important de noter que tous les câblés textiles de ces exemples se caractérisent, quels que soient le matériau (nylon ou aramide) et le titre (47, 94, 140, 55 ou 330 tex) de leurs filés de départ, par des coefficients de torsion finaux (respectivement K2 ou K3 selon que le câblé présente une construction à double torsion T1, T2, ou à triple torsion T1, T2, T3) qui sont très proches, de valeur moyenne égale à environ 195 (variant de 175 à 215).

A la lecture détaillée de ce tableau 1, on note tout d'abord, pour les essais 1 à 3, tous conduits avec des filés en nylon (Mi de 440 cN/tex environ), que le passage de la double torsion (C1, C3 et C5) à la triple torsion (C2, C4 et C6) ne s'accompagne d'aucune modification notable de la force rupture ni des autres propriétés (Ø, titre, ténacité).

Par contre, pour les essais 4 et 5, conduits avec des filés aramides, plus précisément des filés en « Kevlar » de 55 tex ou de 330 tex (Mi de 4000 cN/tex environ), on peut observer que le passage de la construction double torsion (respectivement C7 et C10) à la construction triple torsion (respectivement C8 et C9 d'une part, C11 d'autre part), toutes choses égales par ailleurs, s'accompagne de manière inattendue :

- d'une amélioration de 6% (câblé C9) à 16% (câblé C11) de la force à la rupture et de 8% (câblé C9) à 17% (câblé C11) de la ténacité, ce qui est très significatif pour l'homme du métier ;
- combinée à une diminution notable du diamètre apparent Ø et du titre, indicateurs clairs d'une meilleure compacité des câblés selon l'invention et *in fine* de la qualité de ces renforts, grâce à leur construction très spécifique ;
- le tout se traduisant finalement par une augmentation variant de 12% (câblé C9) à 26% (câblé C11) de la ténacité apparente.

En résumé, l'invention permet donc, pour une même torsion finale donnée, d'améliorer les propriétés de compacité, de force à la rupture et de ténacité des câblés textiles aramides.

En outre et de manière tout aussi surprenante, leur construction nouvelle leur confère une endurance en compression ou flexion-compression qui elle aussi est notablement améliorée, comme attesté par les résultats des essais d'endurance qui suivent.

5.2. Essais d'endurance en compression (« *Disc Fatigue Test* ») ou en flexion-compression (« *Shoe Shine Test* »)

Pour des câblés textiles destinés notamment à renforcer des structures de pneumatiques, la résistance à la fatigue peut être analysée en soumettant ces câblés à divers tests de laboratoire connus, notamment au test de fatigue connu sous le nom de test « courroie » parfois nommé « *Shoe Shine test* », ou encore au test de fatigue dit *"Disc Fatigue Test"* (voir par exemple EP 848 767, US 2 595 069, US 4 902 774, norme ASTM D885-591 révisée 67T), tests dans lesquels les câblés textiles, préalablement encollés, sont incorporés dans un article en caoutchouc que l'on vulcanise.

Le principe du test « courroie », tout d'abord, est le suivant : la courroie comprend deux couches du câblé à tester, dans un mélange connu de caoutchouc du type de ceux couramment utilisés pour le renforcement des pneumatiques. L'axe de chaque câblé est orienté selon la direction longitudinale de la courroie et les câblés sont séparés des faces de cette dernière par une épaisseur de gomme d'environ 1 mm.

On fait ensuite subir à cette courroie les sollicitations suivantes : on entraîne de façon cyclique, à l'aide d'un système bielle-manivelle, la courroie autour d'un galet de diamètre donné, de telle sorte que chaque portion élémentaire de la courroie soit soumise à une tension de 15 daN et subisse des cycles de variation de courbure qui la font passer d'un rayon de courbure infini à un rayon de courbure donné et ceci pendant 190 000 cycles, à une fréquence de 7 Hz. Cette variation de courbure de la courroie fait subir au câblé de la couche intérieure, celle la plus proche du galet, un taux de compression géométrique donné selon le diamètre du galet choisi. A la fin de ces sollicitations, on extrait par décorticage les câblés de la couche intérieure et on mesure la force rupture résiduelle des câblés fatigués.

Le « *Disc Fatigue Test* » est un autre test bien connu de l'homme du métier, il consiste essentiellement à incorporer des câblés à tester dans des blocs de caoutchouc, puis, après cuisson, à fatiguer les éprouvettes de gomme ainsi constituées en compression, entre deux disques tournants, un très grand nombre de cycles (dans les exemples qui suivent, 600 000 cycles à 33 cycles/s). Après fatigue, les câblés sont extraits des éprouvettes et on mesure leur force rupture résiduelle.

Tout d'abord, les câblés C1 à C4, et C7 non conformes à l'invention et les câblés C8 et C9 conformes à l'invention des essais précédents ont été soumis d'une part au « *Disc Fatigue Test* » avec un taux de compression géométrique maximal de l'éprouvette d'environ 16% (angle de 3° entre les deux disques), d'autre part au « *Shoe Shine test* » avec un taux de compression géométrique du câblé de la couche intérieure d'environ 12% (galet de 20 mm).

Dans les deux cas, on a mesuré, sur les câblés extraits après fatigue, les forces à la rupture (Fr) résiduelles indiquées en valeurs relatives dans le tableau 2 annexé. Pour les deux conditions de fatigue, la base 100 a été retenue pour la force à la rupture (Fr) résiduelle mesurée sur les câblés témoins (« T ») à double torsion T1, T2. Une valeur supérieure à 100 indique une force rupture résiduelle qui est augmentée, par conséquent une endurance qui est améliorée par rapport au témoin correspondant.

A la lecture détaillée de ce tableau 2, on note tout d'abord que, pour les essais 1 et 2 conduits avec des filés en nylon, le passage de la double torsion (respectivement C1 et C3) à la triple torsion (respectivement C2 et C4), et ceci quel que soit le type de test *(Disc Fatigue Test* ou *Shoe Shine Test)*, ne s'accompagne d'aucune modification notable compte tenu de la précision habituelle sur ces types de tests, en tout cas pas d'une amélioration quelconque, de l'endurance en compression ou en flexion-compression.

Par contre, pour l'essai 4, conduit avec des filés aramides, on constate de manière surprenante que le passage de la construction double torsion (câblé C7) à la construction triple torsion (câblés C8 et C9), toutes choses égales par ailleurs, s'accompagne de manière inattendue d'une amélioration tout à fait notable (variant de 20% à 62% selon les cas) de la force à la rupture résiduelle, pour chacun des deux tests de fatigue.

On note en particulier que dans le cas du câblé C9 selon l'invention, dans lequel T2 est comprise entre 0,4 et 0,8 fois (en l'occurrence, ici 0,6 fois) T3, l'endurance est encore améliorée par rapport au câblé C8 selon l'invention pour lequel T2 ne vérifie pas cette relation.

Les essais ci-dessus ont été complétés par un essai d'endurance supplémentaire (essai 6 du tableau 2) conduit sur deux autres câblés textiles C12 (témoin) et C13 (invention), à base d'aramide comme pour l'essai 4 précédent, présentant tous deux un coefficient de torsion final (respectivement K2 ou K3) identique (égal à environ 180) à ceux retenus pour les témoins en nylon des essais 1 à 3 précédents.

De manière analogue aux constructions commentées précédemment, la construction notée « A55/-/3/3 » du câblé C12 témoin signifie que ce câblé est un câblé à double torsion (T1, T2) qui est issu simplement d'une opération de torsion (T2 de 310 t/m, D2 ou S) de 3 brins différents qui ont été chacun préparés préalablement par une opération de torsion individuelle en sens inverse (T1 de 310 t/m, D1 ou Z) de 3 filés aramide (A) de titre 55 tex.

Comparativement, pour la construction notée « A55/1/3/3 » du câblé C13 conforme à l'invention, le câblé textile concerné est un câblé à triple torsion (T1, T2, T3) qui est issu d'une opération de torsion finale (T3 de 310 t/m, D2 ou S) de 3 brins différents qui ont été chacun préparés préalablement par une opération de torsion intermédiaire (T2 de 185 t/m) en sens inverse (D1 ou Z) de 3 pré-brins, chacun des pré-brins consistant en 1 filé unique aramide (A) de titre 55 tex qui a été tordu préalablement sur lui-même au cours d'une première opération de torsion T1 (125 t/m) dans la même direction D1 (Z).

Les résultats obtenus ont été ajoutés au tableau 2, ils confirment bien la supériorité du câblé C13 de l'invention à triple torsion, par rapport au câblé C12 témoin à double torsion, avec une augmentation tout à fait notable de la force à la rupture résiduelle, pour chacun des deux tests de fatigue, particulièrement importante pour le test courroie.

En conclusion, grâce à l'invention, il est désormais possible, pour une même torsion finale donnée, d'améliorer non seulement les propriétés de compacité, de force à la rupture et de ténacité des câblés textiles aramides, mais encore leur endurance en compression ou flexion-compression, ainsi d'optimiser encore l'architecture des pneumatiques que ces câblés sont susceptibles de renforcer.

**Tableau 1**

| N° Essai | Réf. Câblé | Nature Câblé | Construction du Câblé | Torsions t/m | | | Coefficient de torsion | | | Force rupture | | Ø apparent | Titre | Ténacité | | Ténacité apparente | |
|---|---|---|---|---|---|---|---|---|---|---|---|---|---|---|---|---|---|
| | | | | - / T1 | T1 / T2 | T2 / T3 | - / K1 | K1 / K2 | K2 / K3 | daN | | mm | tex | cN/tex | | daN/mm² | |
| 1 | C1 | T | N47/-/3/4 | 0 | 250Z | 250S | 0 | 88 | 176 | 35,3 | 100 | 1,05 | 638 | 55 | 100 | 41 | 100 |
| | C2 | C | N47/1/3/4 | 100Z | 150Z | 250S | 20 | 53 | 176 | 34,1 | 97 | 1,02 | 642 | 53 | 96 | 42 | 102 |
| 2 | C3 | T | N94/-/2/3 | 0 | 260Z | 260S | 0 | 106 | 183 | 41,2 | 100 | 1,03 | 636 | 65 | 100 | 50 | 100 |
| | C4 | C | N94/1/2/3 | 100Z | 160Z | 260S | 29 | 65 | 183 | 42,3 | 103 | 1,04 | 640 | 66 | 102 | 50 | 100 |
| 3 | C5 | T | N140/-/2/2 | 0 | 250Z | 250S | 0 | 124 | 175 | 44,5 | 100 | 1,02 | 613 | 73 | 100 | 54 | 100 |
| | C6 | C | N140/1/2/2 | 100Z | 150Z | 250S | 35 | 74 | 175 | 43,5 | 98 | 1,03 | 608 | 72 | 99 | 52 | 96 |
| 4 | C7 | T | A55/-/3/4 | 0 | 300Z | 300S | 0 | 102 | 203 | 110,6 | 100 | 1,07 | 777 | 142 | 100 | 122 | 100 |
| | **C8** | — | A55/1/3/4 | 60Z | 240Z | 300S | 12 | 81 | 203 | **119,4** | **108** | 1,03 | 764 | **156** | **110** | **143** | **117** |
| | **C9** | — | A55/1/3/4 | 120Z | 180Z | 300S | 23 | 61 | 203 | **116,9** | **106** | 1,04 | 765 | **153** | **108** | **137** | **112** |
| 5 | C10 | T | A330/-/3/3 | 0 | 150Z | 150S | 0 | 124 | 215 | 404,2 | 100 | 2,48 | 3482 | 116 | 100 | 84 | 100 |
| | **C11** | — | A330/1/3/3 | 40Z | 110Z | 150S | 19 | 91 | 215 | **467,8** | **116** | 2,37 | 3428 | **136** | **117** | **106** | **126** |

Propriétés mécaniques

**Tableau 2**

| N° Essai | Réf. Câblé | Nature Câblé | Construction du Câblé | Torsions t/m | | | Coefficient de torsion | | | "Disc Fatigue Test" | "Shoe Shine Test" |
|---|---|---|---|---|---|---|---|---|---|---|---|
| | | | | - / T1 | T1 / T2 | T2 / T3 | - / K1 | K1 / K2 | K2 / K3 | Fr résiduelle | Fr résiduelle |
| 1 | C1 | T | N47/-/3/4 | 0 | 250Z | 250S | 0 | 88 | 176 | 100 | 100 |
| | C2 | C | N47/1/3/4 | 100Z | 150Z | 250S | 20 | 53 | 176 | 95 | 97 |
| 2 | C3 | T | N94/-/2/3 | 0 | 260Z | 260S | 0 | 106 | 183 | 100 | 100 |
| | C4 | C | N94/1/2/3 | 100Z | 160Z | 260S | 29 | 65 | 183 | 97 | 99 |
| 4 | C7 | T | A55/-/3/4 | 0 | 300Z | 300S | 0 | 102 | 203 | 100 | 100 |
| | **C8** | **I** | A55/1/3/4 | 60Z | 240Z | 300S | 12 | 81 | 203 | 120 | 136 |
| | **C9** | **I** | A55/1/3/4 | 120Z | 180Z | 300S | 23 | 61 | 203 | 125 | 162 |
| 6 | C12 | T | A55/-/3/3 | 0 | 310Z | 310S | 0 | 105 | 182 | 100 | 100 |
| | **C13** | **I** | A55/1/3/3 | 125Z | 185Z | 310S | 24 | 63 | 182 | 111 | 193 |

**Revendications**

1. Câblé textile aramide (30, 50) à au moins triple torsion (T1, T2, T3), comportant au moins N brins (20, 20a, 20b, 20c, 20d), N étant supérieur à 1, retordus ensemble selon une torsion T3 exprimée en tours par mètre et une direction D2, chaque brin étant constitué de M pré-brins (10, 10a, 10b, 10c), M étant supérieur à 1, eux-mêmes tordus ensemble selon une torsion T2 exprimée en tours par mètre (T2a, T2b, T2c, T2d) et une direction D1 opposée à D2, chaque pré-brin consistant lui-même en un filé (5) qui a été tordu préalablement sur lui-même selon une torsion T1 exprimée en tours par mètre (T1a, T1b, T1c) et la direction D1, dans lequel au moins la moitié des N fois M filés sont des filés aramides et dans lequel la somme T1+T2 est comprise entre 0,8 et 1,2 fois T3.

2. Câblé selon la revendication 1, dans lequel:

   - N varie dans un domaine de 2 à 6,
   - M varie dans un domaine de 2 à 6, et
   - le nombre total N fois M de filés est compris dans un domaine de 4 à 25.

3. Câblé selon l'une quelconque des revendications précédentes, dans lequel la torsion T1 exprimée en tours par mètre est comprise entre 10 et 350, de préférence entre 20 et 200.

4. Câblé selon l'une quelconque des revendications précédentes, dans lequel chaque pré-brin présente un coefficient de torsion K1 qui est compris entre 2 et 80, de préférence entre 6 et 70, avec $K1 = T1 \times [(Titre\ 1\ /\ (1000.\rho 1)]^{1/2}$ dans laquelle T1 est exprimée en tours par mètre, Titre 1 est le titre de chaque pré-brin exprimé en tex, et $\rho 1$ est la densité du matériau constitutif de chaque pré-brin.

5. Câblé selon l'une quelconque des revendications précédentes, dans lequel la torsion T2 exprimée en tours par mètre est comprise entre 25 et 470, de préférence entre 35 et 400.

6. Câblé selon l'une quelconque des revendications précédentes, dans lequel chaque brin présente un coefficient de torsion K2 qui est compris entre 10 et 150, de préférence entre 20 et 130, avec $K2 = T2 \times [(Titre\ 2\ /\ (1000.\rho 2)]^{1/2}$ dans laquelle T2 est exprimée en tours par mètre, Titre 2 est le titre de chaque brin exprimé en tex, et $\rho 2$ est la densité du matériau constitutif de chaque brin.

7. Câblé selon l'une quelconque des revendications précédentes, dans lequel la torsion T3 exprimée en tours par mètre est comprise entre 30 et 600, de préférence entre 80 et 500.

8. Câblé selon l'une quelconque des revendications précédentes, présentant un coefficient de torsion K3 qui est compris entre 50 et 500, de préférence entre 80 et 230, avec $K3 = T3 \times [(Titre\ 3\ /\ (1000.\rho 3)]^{1/2}$ dans laquelle T3 est exprimée en tours par mètre, Titre 3 est le titre du câblé exprimé en tex, et p3 est la densité du matériau constitutif du câblé.

9. Câblé selon l'une quelconque des revendications précédentes, dans lequel T2 est supérieure à T1.

10. Câblé selon l'une quelconque des revendications précédentes, dans lequel T3 est supérieure à T2.

11. Câblé selon la revendication précédente, dans lequel T2 est comprise entre 0,2 et 0,95 fois T3, de préférence entre 0,4 et 0,8 fois T3.

12. Câblé selon l'une quelconque des revendications précédentes, dans lequel la somme T1+T2 est comprise entre 0,9 et 1,1 fois T3, de préférence la somme T1+T2 est égale à T3.

13. Câblé selon l'une quelconque des revendications précédentes, dans lequel les N fois M filés sont pour leur totalité des filés aramides.

14. Article ou produit semi-fini en matière plastique ou en caoutchouc renforcé d'un câblé selon l'une quelconque des revendications 1 à 13.

15. Pneumatique renforcé d'un câblé selon l'une quelconque des revendications 1 à 13.

**Patentansprüche**

1. Aramid-Textilcord (30, 50) mit wenigstens dreifacher Torsion (T1, T2, T3), der wenigstens N Fasern (20, 20a, 20b, 20c, 20d) enthält, wobei N größer als 1 ist, die gemeinsam gemäß einer Torsion T3 gezwirnt sind, ausgedrückt durch Umläufe pro Meter und eine Richtung D2, wobei jede Faser aus M Vorfasern (10, 10a, 10b, 10c) gebildet ist, wobei M größer als 1 ist, die ihrerseits gemeinsam gemäß einer Torsion T2 gezwirnt sind, ausgedrückt durch Umläufe pro Meter (T2a, T2b, T2c, T2d) und eine Richtung D1 entgegengesetzt zu D2, wobei jede Vorfaser ihrerseits einen Faden (5) bildet, der im Voraus gemäß einer Torsion T1, ausgedrückt in Umläufen pro Meter (T1a, T1b, T1c) und die Richtung D1, auf sich selbst gezwirnt worden ist, wobei wenigstens die Hälfte der N mal M Fäden Aramidfäden sind und wobei die Summe T1 + T2 im Bereich des 0,8- bis 1,2-Fachen von T3 liegt.

2. Cord nach Anspruch 1, wobei:

   - N in einem Bereich von 2 bis 6 variiert,
   - M in einem Bereich von 2 bis 6 variiert und
   - die Gesamtzahl von N mal M Fäden im Bereich von 4 bis 25 liegt.

3. Cord nach einem der vorhergehenden Ansprüche, wobei die Torsion T1, ausgedrückt in Umläufen pro Meter, im Bereich von 10 bis 350, vorzugsweise von 20 bis 200, liegt.

4. Cord nach einem der vorhergehenden Ansprüche, wobei jede Vorfaser einen Torsionskoeffizienten K1 aufweist, der im Bereich von 2 bis 80, vorzugsweise von 6 bis 70, liegt, wobei $K1 = T1 \times [(\text{Feinheit } 1/(1000 \cdot \rho1)]^{1/2}$, wobei T1 in Umläufen pro Minute ausgedrückt wird, Feinheit 1 die Feinheit jeder Vorfaser, ausgedrückt in tex, ist und $\rho1$ die Dichte des jede Vorfaser bildenden Materials ist.

5. Cord nach einem der vorhergehenden Ansprüche, wobei die Torsion T2, ausgedrückt in Umläufen pro Meter, im Bereich von 25 bis 470, vorzugsweise von 35 bis 400, liegt.

6. Cord nach einem der vorhergehenden Ansprüche, wobei jede Faser einen Torsionskoeffizienten K2 aufweist, der im Bereich von 10 bis 150, vorzugsweise von 20 bis 130, liegt, wobei $K2 = T2 \times [(\text{Feinheit } 2/(1000 \cdot \rho2)]^{1/2}$, wobei T2 in Umläufen pro Meter ausgedrückt wird, Feinheit 2 die Feinheit jeder Faser, ausgedrückt in tex, ist, und $\rho2$ die Dichte des jede Faser bildenden Materials ist.

7. Cord nach einem der vorhergehenden Ansprüche, wobei die Torsion T3, ausgedrückt in Umläufen pro Meter, im Bereich von 30 bis 600, vorzugsweise von 80 bis 500, liegt.

8. Cord nach einem der vorhergehenden Ansprüche, der einen Torsionskoeffizienten K3 aufweist, der im Bereich von 50 bis 500, vorzugsweise von 80 bis 230, liegt, wobei $K3 = T3 \times [(\text{Feinheit } 3/(1000 \cdot \rho3)]^{1/2}$, wobei T3 in Umläufen pro Meter ausgedrückt wird, Feinheit 3 die Feinheit des Cords, ausgedrückt in tex, ist und $\rho3$ die Dichte des den Cord bildenden Materials ist.

9. Cord nach einem der vorhergehenden Ansprüche, wobei T2 größer als T1 ist.

10. Cord nach einem der vorhergehenden Ansprüche, wobei T3 größer als T2 ist.

11. Cord nach dem vorhergehenden Anspruch, wobei T2 im Bereich des 0,2- bis 0,95-Fachen von T3, vorzugsweise des 0,4- bis 0,8-Fachen von T3, liegt.

12. Cord nach einen der vorhergehenden Ansprüche, wobei die Summe T1 + T2 im Bereich des 0,9- bis 1,1-Fachen von T3 liegt, wobei vorzugsweise die Summe T1 + T2 gleich T3 ist.

13. Cord nach einem der vorhergehenden Ansprüche, wobei alle N mal M Fäden Aramidfäden sind.

14. Artikel oder halbfertiges Produkt aus Kunststoff oder aus Kautschuk, der mit einem Cord nach einem der Ansprüche 1 bis 13 verstärkt ist.

15. Luftreifen, der mit einem Cord nach einem der Ansprüche 1 bis 13 verstärkt ist.

**Claims**

1. Aramid textile cord (30, 50) with at least triple twist (T1, T2, T3) comprising at least N strands (20, 20a, 20b, 20c, 20d), N being greater than 1, twisted together with a twist T3 expressed in turns per metre and a direction D2, each strand being made up of M pre-strands (10, 10a, 10b, 10c), M being greater than 1, themselves twisted together with a twist T2 expressed in turns per metre (T2a, T2b, T2c, T2d) and a direction D1 opposite to D2, each pre-strand itself consisting of a yarn (5) which has been twisted on itself beforehand with a twist T1 expressed in turns per metre (T1a, T1b, T1c) and the direction D1, in which at least half of the N times M yarns are aramid yarns and in which the sum T1 + T2 is comprised between 0.8 and 1.2 times T3.

2. Cord according to Claim 1, in which:

   - N varies in a range from 2 to 6,
   - M varies in a range from 2 to 6, and
   - the total number N times M of yarns is comprised in a range from 4 to 25.

3. Cord according to either one of the preceding claims, in which the twist T1 expressed in turns per metre is comprised beween 10 and 350, preferably between 20 and 200.

4. Cord according to any one of the preceding claims, in which each pre-strand has a twist coefficient K1 which is comprised beween 2 and 80, preferably between 6 and 70, where $K1 = T1 \times [\text{yarn count } 1/(1000 \cdot \rho1)]^{1/2}$ in which T1 is expressed in turns per metre, yarn count 1 is the yarn count of each pre-strand expressed in tex, and $\rho1$ is the density of the material of which each pre-strand is made.

5. Cord according to any one of the preceding claims, in which the twist T2 expressed in turns per metre is comprised between 25 and 470, preferably between 35 and 400.

6. Cord according to any one of the preceding claims, in which each strand has a twist coefficient K2 which is comprised between 10 and 150, preferably between 20 and 130, where $K2 = T2 \times [\text{yarn count } 2/(1000 \cdot \rho2)]^{1/2}$ in which T2 is expressed in turns per metre, yarn count 2 is the yarn count of each strand expressed in tex, and $\rho2$ is the density of the material of which each strand is made.

7. Cord according to any one of the preceding claims, in which the twist T3 expressed in turns per metre is comprised beween 30 and 600, preferably beween 80 and 500.

8. Cord according to any one of the preceding claims, having a twist coefficient K3 which is comprised beween 50 and 500, preferably between 80 and 230, where $K3 = T3 \times [\text{yarn count } 3/(1000 \cdot \rho3)]^{1/2}$ in which T3 is expressed in turns per metre, yarn count 3 is the yarn count of the cord expressed in tex, and $\rho3$ is the density of the material of which the cord is made.

9. Cord according to any one of the preceding claims, in which T2 is greater than T1.

10. Cord according to any one of the preceding claims, in which T3 is greater than T2.

11. Cord according to the preceding claim, in which T2 is comprised between 0.2 and 0.95 times T3, preferably between 0.4 and 0.8 times T3.

12. Cord according to any one of the preceding claims, in which the sum T1+T2 is comprised beween 0.9 and 1.1 times T3, preferably the sum T1+T2 is equal to T3.

13. Cord according to any one of the preceding claims, in which all of the N times M yarns are aramid yarns.

14. Item or semi-finished product made of plastic or of rubber reinforced with a cord according to any one of Claims 1 to 13.

15. Tyre reinforced with a cord according to any one of Claims 1 to 13.

# Fig. 1

# Fig. 2

## Fig. 3

# Fig. 4

## Fig. 5

## Fig. 6

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 021485 A
- EP 220642 A
- EP 225391 A
- EP 335588 A
- EP 467585 A
- US 3419060 A
- US 3977172 A
- US 4155394 A
- US 5558 A
- US 144 A
- WO 9706294 A
- EP 848767 A
- WO 2012L04279 A
- WO 2012146612 A
- WO 2014057082 A
- EP 2186652 A
- US 1708668 A
- US 2116937 A
- US 1632201 A
- US 2595069 A
- US 4902774 A